# FASCICULE DE BREVET EUROPEEN

(11) **EP 0 718 478 B1**
(45) Date de publication et mention de la délivrance du brevet: **04.04.2001**
(21) Numéro de dépôt: 95402671.2
(22) Date de dépôt: 27.11.1995
(51) Int. Cl.: F01N 3/28, F01N 3/08, B01D 53/04

(54) **Dispositif de traitement des gaz d'échappement d'un moteur à allumage par compression comportant un catalyseur et un adsorbeur d'oxydes d'azote placés dans le collecteur d'échappement**
Abgasbehandlungsvorrichtung einer Dieselbrennkraftmaschine mit einem Katalysator und einem Stickoxydenadsorber, die in Abgaskrümmer angeordnet sind
Device to treat the exhaust gases of a diesel engine comprising a catalytic converter and an adsorber of nitrogen oxydes, placed in the exhaust manifold

(30) Priorité: 19.12.1994 FR 9415264
(43) Date de publication de la demande: 26.06.1996
(73) Titulaire: AUTOMOBILES PEUGEOT, 75116 Paris (FR); AUTOMOBILES CITROEN, 92200 Neuilly-sur-Seine (FR)
(72) Inventeur: Noirot, Rémi, F-92400 Courbevoie (FR)
(74) Mandataire: Bouget, Lucien

(56) Documents cités:
- EP-A- 0 598 916
- WO-A-86/04525
- DE-A- 3 928 760
- DE-C- 4 319 294
- FR-A- 2 209 399
- US-A- 4 047 895
- US-A- 4 087 966
- PATENT ABSTRACTS OF JAPAN vol. 14 no. 13 (M-918) ,11 Janvier 1990 & JP-A-01 257710 (MAZDA) 13 Octobre 1989,

## Description

L'invention concerne un dispositif de traitement de gaz d'échappement d'un moteur à allumage par compression d'un véhicule automobile pour réaliser une élimination la plus complète possible des oxydes d'azote contenus dans le gaz d'échappement.

Les gaz d'échappement des moteurs à allumage par compression ou moteurs Diesel renferment différents polluants dont il est nécessaire de limiter au maximum les rejets dans l'atmosphère. Ces polluants sont constitués principalement par du monoxyde de carbone CO, des hydrocarbures imbrûlés HC, des oxydes d'azote NOₓ et des particules de suie.

La réglementation concernant les normes de pollution des véhicules automobiles a tendance à devenir de plus en plus sévère, de sorte que les limites supérieures fixées de rejet des différents polluants ont tendance à devenir de plus en plus basses dans les nouvelles réglementations.

En ce qui concerne les véhicules à moteur Diesel, la réglementation qui sera en vigueur dans les années 2000 impose des rejets en CO inférieurs à 0,5 g/km, des rejets cumulés en HC et NOₓ inférieurs à 0,5 g/km et des rejets de particules inférieurs à 0,04 g/km.

Du fait que les concentrations en polluants dans les gaz d'échappement des moteurs Diesel construits actuellement sont supérieures à ces limites, il est nécessaire d'envisager le traitement des gaz d'échappement de moteurs Diesel.

On connaît des dispositifs de traitement par oxydation catalysée du monoxyde de carbone CO et des hydrocarbures HC contenus dans les gaz d'échappement. Pour satisfaire aux nouvelles réglementations, il est nécessaire d'adjoindre à ces dispositifs de traitement par oxydation catalysée, des catalyseurs de réduction des oxydes d'azote, de tels catalyseurs étant désignés par l'appellation "Denox".

On connaît des catalyseurs de réduction des oxydes d'azote ou catalyseur Denox, qui sont actifs pour réaliser la réduction des oxydes d'azote de gaz d'échappement, dans des plages de température comprises entre 200 et 350°C ou bien entre 350 et 600°C. Dans ces plages, le taux de conversion des oxydes d'azote par réduction peut être représenté par des pics de conversion dont le maximum peut atteindre jusqu'à 50 % d'oxydes d'azote convertis en azote N₂ et oxygène O₂ et qui sont centrés sur des températures de 250 et 400 à 450°C, respectivement, selon le type de catalyseur utilisé.

Les catalyseurs assurant la conversion des oxydes d'azote entre 200 et 350°C avec un pic de conversion centré sur 250°C peuvent être constitués par des métaux précieux sur des support en oxyde, tels que du platine ou du palladium déposé sur un corps en alumine ou en oxyde de titane ou par des pérovskites.

Les catalyseurs Denox fonctionnant entre 350 et 600°C avec un pic de conversion centré sur une température comprise entre 400 et 450°C peuvent être constitués par des zéolithes hydrothermiquement stables (par exemple Cu-ZSM5).

Pour que ces catalyseurs Denox fonctionnent dans des conditions satisfaisantes, il est nécessaire que les plages de températures des gaz d'échappement enregistrées en amont du catalyseur coïncident avec les plages de température de conversion des catalyseurs Denox.

Les essais d'homologation des moteurs Diesel, en ce qui concerne les rejets de matières polluantes, sont définis de telle sorte que les températures des gaz d'échappement sont comprises entre 80 et 220°C avec une moyenne de l'ordre de 150°C, pendant une première partie du cycle d'homologation officielle défini par les normes européennes et entre 200 et 450 ou même 550°C dans le cas de certains moteurs atmosphériques, avec une moyenne de température centrée entre 250 et 280°C, au cours d'une seconde partie du cycle d'homologation.

De ce fait, les émissions d'oxydes d'azote dans les gaz d'échappement des moteurs Diesel peuvent être réduites par catalyse seulement dans la seconde partie du cycle d'homologation (ou cycle chaud). En revanche, dans la première partie froide du cycle d'homologation, les températures d'échappement sont trop faibles pour qu'on obtienne une conversion effective des oxydes d'azote.

De manière à réaliser une élimination partielle des émissions d'oxydes d'azote dans la partie froide du cycle d'homologation, on a proposé, par exemple dans les documents JP 06121925 et DE 43 19 294, de réaliser une adsorption des oxydes d'azote, pendant la partie froide du cycle, dans un piège constitué par des matériaux réalisant une adsorption des oxydes d'azote à basse température et assurant une désorption de ces oxydes à haute température.

Le dispositif de traitement comportant un piège pour les oxydes d'azote peut fonctionner correctement dans la mesure où la désorption des oxydes d'azote se produit à un moment où le catalyseur principal de réduction Denox est à une température à laquelle il présente une activité effective.

Il est donc nécessaire que le piège absorbe les oxydes d'azote pendant toute la première phase du cycle d'homologation et jusqu'au moment où le catalyseur Denox a atteint une température suffisante pendant la seconde partie chaude du cycle d'homologation, le piège assurant alors la désorption des oxydes d'azote piégés qui viennent en contact avec le catalyseur Denox dont la température est suffisante pour assurer son amorçage.

Le catalyseur peut alors convertir les oxydes d'azote en azote et oxygène.

De manière à obtenir une efficacité maximale du dispositif de traitement, il est préférable que le piège absorbe les oxydes d'azote dès la température ambiante et assure leur désorption dans la plage de températures de conversion du catalyseur principal Denox.

On a proposé des dispositifs de traitement dans lesquels l'adsorbeur des oxydes d'azote est placé de différentes manières par rapport au catalyseur principal Denox.

Généralement, l'adsorbeur d'oxydes d'azote est placé en amont du catalyseur Denox, de sorte qu'une partie de l'énergie thermique apportée par les gaz d'échappement pour échauffer le catalyseur Denox se trouve dissipée dans l'adsorbeur, ce qui entraîne les inconvénients suivants :
- le temps de stockage des oxydes d'azote sur l'adsorbeur est trop court ;
- le catalyseur Denox parvient à sa température d'amorçage en un temps plus long que dans le cas d'un dispositif ne comportant pas d'adsorbeur d'oxydes d'azote.

Il en résulte généralement que les oxydes d'azote sont désorbés avant que le catalyseur Denox ne soit parvenu à sa température d'amorçage.

Les moteurs à combustion interne tels que les moteurs Diesel peuvent comporter un collecteur d'échappement ayant une enveloppe de forme cylindrique dans laquelle débouchent, dans une direction sensiblement tangentielle, les tubulures d'échappement de chacun des cylindres du moteur.

L'une au moins des extrémités longitudinales du collecteur d'échappement est reliée à une ligne d'échappement du véhicule automobile.

Du fait que les gaz d'échappement parviennent dans le collecteur directement à la sortie du moteur avec de faibles pertes thermiques, il peut être avantageux de placer le catalyseur principal Denox à l'intérieur du collecteur.

De telles dispositions ont déjà été proposées. Cependant, on n'a jamais proposé de placer dans le collecteur d'échappement d'un moteur à combustion interne, à la fois un catalyseur de traitement et un adsorbeur de matières polluantes.

Dans le WO-A-86/04525, on a proposé un dispositif de traitement catalytique des gaz d'échappement d'un moteur Diesel comportant dans une enceinte cylindrique dans laquelle les gaz d'échappement pénètrent tangentiellement, un corps catalyseur cellulaire et un lit de particules recouvertes de catalyseur dans le fond d'une chambre annulaire entourant le corps catalyseur. On réalise une post-combustion des gaz et une adsorption des suies dans la chambre annulaire périphérique et une post-combustion et la réduction d'oxyde d'azote dans le corps catalyseur.

Les particules n'occupent qu'une partie basse de la chambre annulaire et ne permettent pas de réduire les rejets d'oxydes d'azote.

Le but de l'invention est donc de proposer un dispositif de traitement des gaz d'échappement d'un moteur à allumage par compression d'un véhicule automobile comportant au moins un corps catalyseur disposé à l'intérieur d'un collecteur d'échappement du moteur ayant une enveloppe de forme cylindrique dans laquelle débouche, dans une direction sensiblement tangentielle, au moins une tubulure d'échappement reliée à un cylindre du moteur et qui est reliée, à l'une au moins de ses extrémités longitudinales, à au moins une ligne d'échappement du véhicule automobile, ce dispositif de traitement permettant de réaliser la conversion des oxydes d'azote contenus dans les gaz d'échappement rejetés dans une phase quelconque du cycle de fonctionnement ou d'homologation du véhicule.

Dans ce but, le dispositif de traitement suivant l'invention comporte, à l'intérieur de l'enveloppe cylindrique du collecteur d'échappement, le corps catalyseur dans une disposition centrale et au moins un moyen d'adsorption des oxydes d'azote des gaz d'échappement dans une disposition périphérique autour du corps catalyseur, de telle sorte que les gaz d'échappement introduits par la tubulure dans l'enveloppe circulent de manière tourbillonnaire autour du corps catalyseur en contact avec le moyen d'adsorption et avec une surface externe du corps catalyseur.

Afin de bien faire comprendre l'invention, on va maintenant décrire, à titre d'exemple non limitatif, en se référant aux figures jointes en annexe, plusieurs modes de réalisation d'un dispositif de traitement des gaz d'échappement d'un moteur Diesel, suivant l'invention.

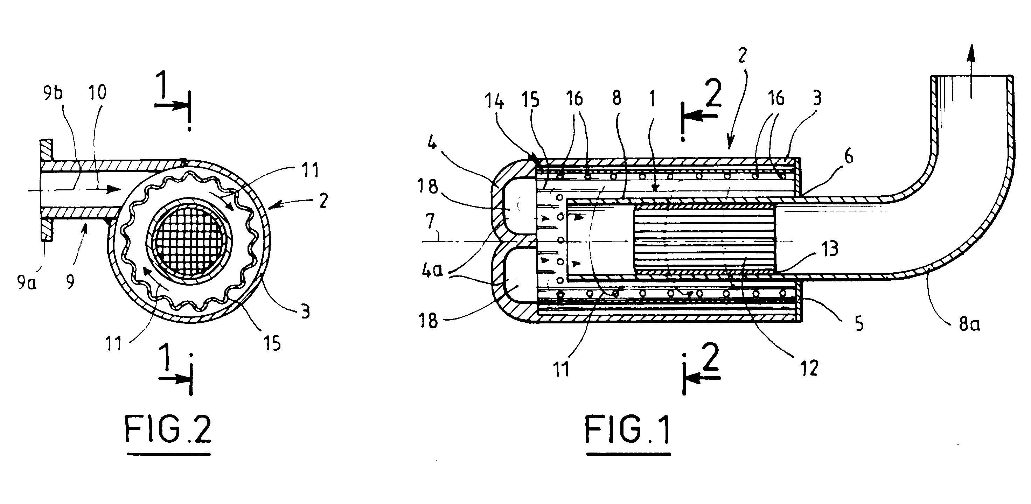

Les figures 1 et 2 sont relatives à un premier mode de réalisation de l'invention.

La figure 1 est une vue en coupe axiale suivant 1-1 de la figure 2.

La figure 2 est une vue en coupe transversale suivant 2-2 de la figure 1.

Les figures 3 et 4 sont relatives à un second mode de réalisation d'un dispositif suivant l'invention.

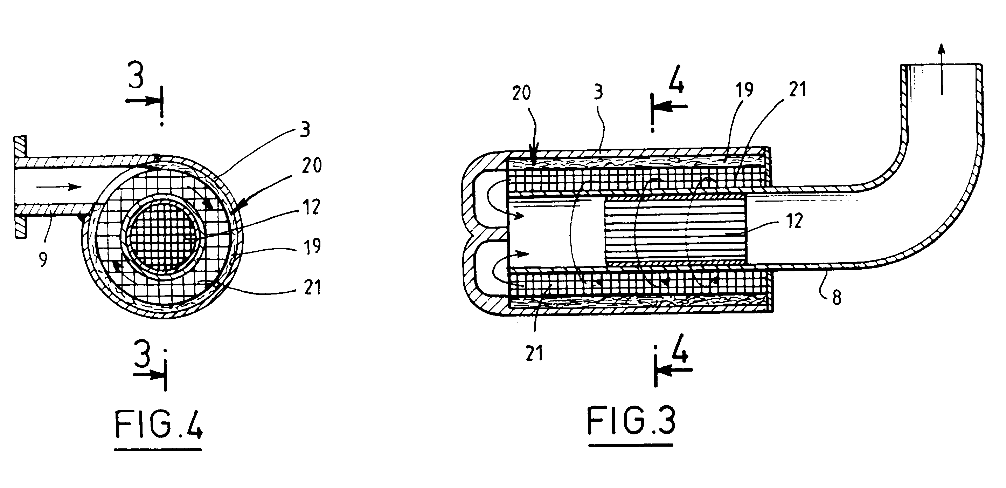

La figure 3 est une vue en coupe axiale suivant 3-3 de la figure 4.

La figure 4 est une vue en coupe transversale suivant 4-4 de la figure 3.

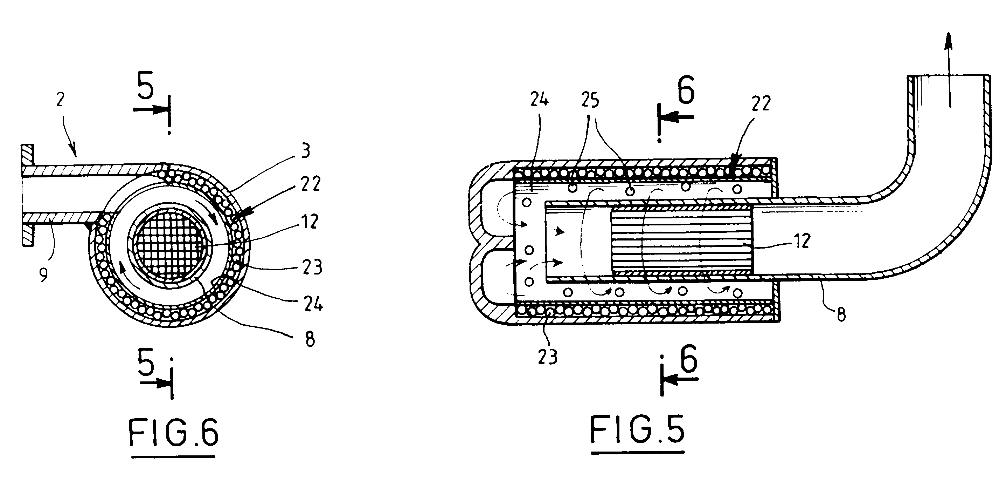

Les figures 5 et 6 sont relatives à un troisième mode de réalisation du dispositif de traitement suivant l'invention.

La figure 5 est une vue en coupe longitudinale suivant 5-5 de la figure 6.

La figure 6 est une vue en coupe transversale suivant 6-6 de la figure 5.

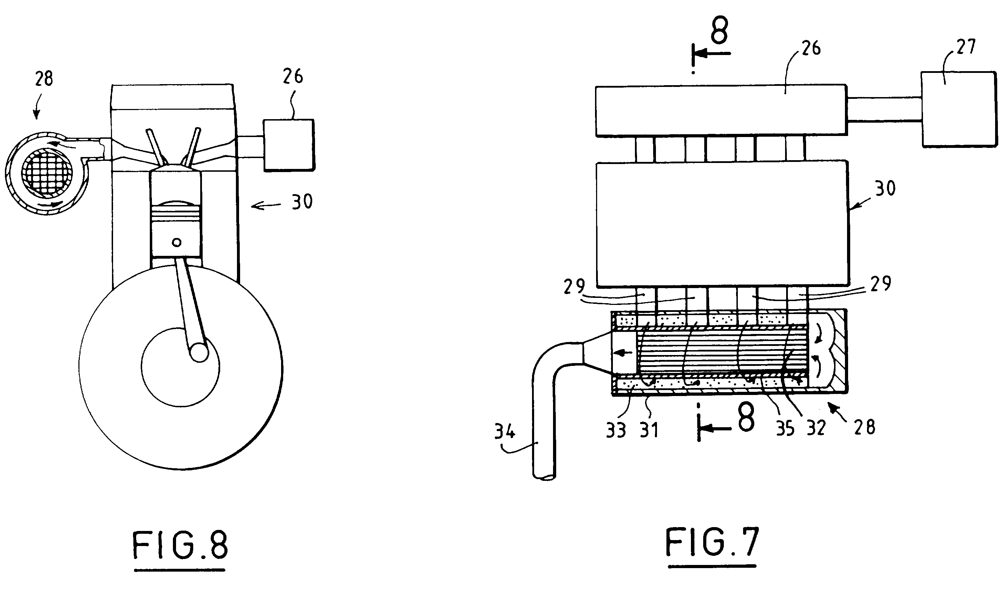

La figure 7 est une vue de dessus d'un moteur Diesel équipé d'un dispositif de traitement suivant l'invention.

La figure 8 est une vue en coupe suivant 8-8 de la figure 7.

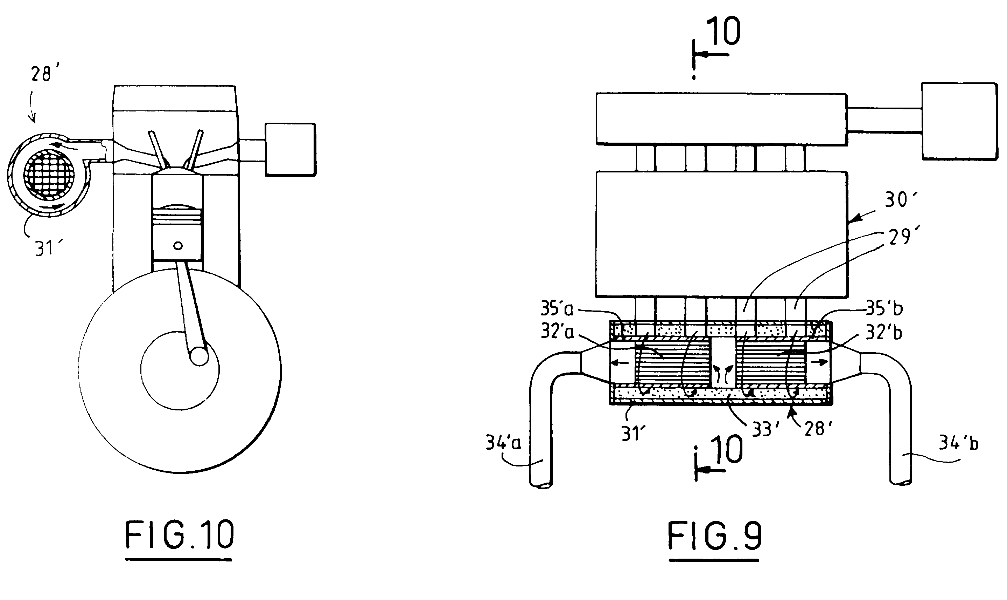

La figure 9 est une vue de dessus et en coupe d'un moteur Diesel comprenant un dispositif de traitement suivant l'invention et suivant une variante de réalisation.

La figure 10 est une vue en coupe suivant 10-10 de la figure 9.

Sur les figures 1 et 2, on voit un dispositif de traitement de gaz d'échappement suivant l'invention désigné de manière générale par le repère 1, disposé à l'intérieur du collecteur d'échappement 2 d'un moteur Diesel.

Le collecteur d'échappement 2 comporte une enveloppe 3 en tôle d'acier inoxydable, de forme sensiblement cylindrique fermée à l'une de ses extrémités par un fond 4 légèrement bombé, de manière à ménager à l'intérieur de l'enveloppe 3, une cavité 4a de forme sensiblement torique.

Sur la partie d'extrémité de l'enveloppe 3 du collecteur 2 opposée au fond 4, est fixé, de manière étanche, un fond plat 5 traversé par une ouverture centrale 6 dans laquelle est engagé, dans la direction axiale 7 du collecteur 2, une partie terminale rectiligne 8 d'une ligne d'échappement 8a du véhicule automobile dont le moteur Diesel assure la propulsion. Le tronçon terminal rectiligne 8 de la ligne d'échappement constituant un conduit de recueil des gaz d'échappement à l'intérieur du collecteur s'étend dans la direction axiale 7, à l'intérieur de l'enveloppe 3 du collecteur, sur une longueur un peu inférieure à la longueur totale du collecteur, de manière que l'extrémité du conduit 8 se trouve en vis-à-vis et à proximité du fond 4 de l'enveloppe 3 dans lequel est ménagée la cavité 4a.

Comme il est visible sur la figure 2, l'enveloppe 3 du collecteur 2 comporte une ouverture dans sa partie supérieure, au niveau de laquelle est fixée par soudure, sur l'enveloppe 3, une tubulure 9 comportant une bride 9a de raccordement à la culasse du moteur Diesel. La tubulure 9 débouche à l'intérieur de l'enveloppe 3 du collecteur 2 dans une direction 9b sensiblement tangentielle par rapport à l'enveloppe cylindrique 3. Les gaz d'échappement du moteur Diesel qui circulent dans la direction de l'axe 9b de la tubulure, comme indiqué par la flèche 10, pénètrent dans une direction tangentielle à l'intérieur de l'enveloppe 3 et sont mis en circulation à l'intérieur de l'enveloppe 3, sous forme d'un courant rotatif autour de l'axe 7 de l'enveloppe 3 du collecteur, comme représenté par les flèches 11.

Le dispositif de traitement de gaz d'échappement suivant l'invention, désigné de manière générale par le repère 1, qui est disposé entièrement à l'intérieur de l'enveloppe 3 du collecteur, comporte un corps catalyseur 12 disposé à l'intérieur du conduit 8, dans sa partie introduite à l'intérieur du collecteur et un adsorbeur 14 disposé autour du corps catalyseur 12 et du conduit 8, dans un espace annulaire délimité à l'intérieur de l'enveloppe 3 du collecteur par le conduit 8.

Le corps catalyseur 12, qui peut être fixé à l'intérieur d'une enveloppe cylindrique métallique 13 insérée dans le conduit 8, comporte un support traversé par des canaux de circulation des gaz de direction longitudinale sensiblement parallèles à l'axe 7 de l'enveloppe du collecteur sur lequel sont déposés des matériaux catalyseurs tels que des métaux précieux. Le corps catalyseur 12 réalisé sous forme monolithique doit permettre à la fois la conversion par oxydation du monoxyde de carbone CO et des hydrocarbures HC sous forme de dioxyde de carbone CO₂ et de vapeur d'eau H₂O et la conversion des oxydes de l'azote NOₓ par réduction, sous la forme d'azote N₂ et d'oxygène O₂. Le corps catalyseur 12 est du type désigné sous l'appellation oxydant-Denox.

Un tel corps catalyseur est un élément connu dans la technique de construction des pots catalytiques.

L'adsorbeur 14 d'oxydes d'azote peut être réalisé sous la forme d'une enveloppe tubulaire 15 en tôle d'acier inoxydable ondulée revêtue d'un adsorbeur d'oxydes d'azote tel que par exemple un oxyde de zirconium légèrement substitué par du manganèse, tel que Zr_{0,9}Mn_{0,1}O₂. L'enveloppe tubulaire 15 peut être réalisée par enroulement sur elle-même d'une tôle ondulée en acier inoxydable revêtue de matériau d'adsorption des oxydes d'azote ou directement sous la forme d'un tube en acier inoxydable revêtu extérieurement et intérieurement de matériau d'adsorption et présentant, suivant sa périphérie, des ondulations successives de direction axiale.

L'enveloppe tubulaire 15 de l'adsorbeur 14 présente une longueur dans la direction axiale sensiblement égale à la distance entre le fond plat 5 et la partie périphérique du fond bombé 4 du collecteur 2. L'enveloppe tubulaire 15 de l'adsorbeur 14 peut être fixée à l'intérieur de l'enveloppe 3, par serrage entre les fonds 5 et 6 du collecteur.

L'enveloppe tubulaire 15 de l'adsorbeur 14 est percée par des ouvertures traversantes 16 réparties suivant toute sa surface, de manière à permettre aux gaz d'échappement pénétrant dans le collecteur, de traverser l'enveloppe de l'adsorbeur qui est ainsi perméable aux gaz d'échappement sur toute sa surface. Les gaz d'échappement pénétrant dans une direction tangentielle dans l'enveloppe 3 du collecteur viennent en contact avec l'enveloppe 15 de l'adsorbeur 14 qui est revêtue d'une couche de matériau d'adsorption des oxydes d'azote. Les ouvertures 16 permettent le passage des gaz à l'intérieur de l'enveloppe 15, de sorte que les gaz d'échappement en circulation tourbillonnaire autour de l'axe 7 de la chambre du collecteur 3, comme représenté par les flèches 11, peuvent venir en contact avec l'enveloppe 15 sur sa face extérieure et sur sa face intérieure et avec la surface extérieure du conduit d'échappement 8 dans lequel est disposé le corps catalyseur 12. Les gaz chauds provenant du moteur et en circulation tourbillonnaire viennent donc en contact avec l'adsorbeur 14 et se trouvent en contact thermique avec la surface externe du corps catalyseur 12 dont ils assurent l'échauffement.

La surface active de l'enveloppe 15 est accrue par la présence des ondulations. En outre, les ondulations favorisent la mise en contact des gaz d'échappement avec les surfaces actives en perturbant leur écoulement. Les oxydes d'azote contenus dans les gaz d'échappement sont adsorbés par les surfaces de l'adsorbeur 14 dans une proportion importante. Les matériaux d'adsorption sont choisis de manière que les oxydes d'azote soient adsorbés dès la température ambiante. L'adsorption des oxydes d'azote est donc réalisée dès le démarrage du moteur Diesel et pendant toutes les phases initiales du fonctionnement du moteur pendant lesquelles les gaz d'échappement sont à une température relativement basse, par exemple inférieure à 200°C.

Au cours d'un cycle d'homologation du moteur Diesel, l'adsorbeur 14 assure en particulier l'adsorption de quantités importantes d'oxydes d'azote des gaz d'échappement, pendant toute la partie froide du cycle d'homologation.

En outre, les gaz d'échappement viennent en contact avec la surface extérieure du conduit d'échappement 8 dans lequel est disposé le corps catalyseur 12. Les gaz d'échappement assurent donc l'échauffement du corps catalyseur 12 dont la surface extérieure est en contact intime avec la surface intérieure du conduit 8.

Pendant les phases initiales de fonctionnement du moteur, la température du corps catalyseur 12 s'élève progressivement, du fait de sa mise en contact thermique avec les gaz d'échappement dont la température augmente.

Une partie des gaz d'échappement en circulation à l'intérieur de l'enveloppe 3 du collecteur 2 vient en contact avec la surface de la cavité 4a du fond 4 du collecteur assurant un renvoi de ces gaz dans une direction proche de la direction de l'axe 7 de l'enveloppe du collecteur 2.

Les gaz mis en circulation tourbillonnaire à l'intérieur de l'enveloppe 3 du collecteur 2 et parvenant à l'extrémité du conduit d'échappement 8 pénètrent dans le conduit d'échappement dans la direction axiale 7 pour traverser le corps catalyseur 12.

Tant que la température du corps catalyseur 12 est inférieure à la température d'amorçage du catalyseur de réduction des oxydes d'azote, les gaz d'échappement traversent le corps catalyseur 12, sans qu'il se produise une conversion des oxydes d'azote en azote et en oxygène.

Cependant, du fait qu'une proportion importante des oxydes d'azote des gaz d'échappement est adsorbée par les surfaces de l'adsorbeur 14, les gaz rejetés à l'atmosphère pendant les phases initiales de fonctionnement du moteur ou pendant la première partie du cycle d'homologation renferment des proportions d'oxydes d'azote très nettement inférieures aux proportions contenues dans le gaz d'échappement à la sortie du moteur.

Les éléments constitutifs du dispositif de traitement, à savoir le corps catalyseur 12 et l'adsorbeur 14 sont réalisés de manière telle que l'adsorbeur 14 atteint sa température de désorption des oxydes d'azote, sensiblement au moment où le corps catalyseur 12 atteint sa température d'amorçage pour la réduction des oxydes d'azote.

Lorsque la température de désorption est atteinte, les oxydes d'azote retenus dans le piège constitué par l'adsorbeur 14 sont libérés progressivement et pénètrent avec les gaz d'échappement qui réalisent leur balayage, à l'intérieur du conduit d'échappement 8 dans lequel se trouve le corps catalyseur 12. Le corps catalyseur 12 qui est à une température au moins égale à sa température d'amorçage de la réduction des oxydes d'azote assure la conversion des oxydes d'azote en azote et oxygène, dans une proportion importante.

Les gaz rejetés à l'atmosphère ne renferment que de faibles quantités d'oxydes d'azote.

En particulier, au cours du cycle d'homologation d'un moteur Diesel, les oxydes d'azote contenus dans les gaz d'échappement sont adsorbés par l'adsorbeur 14, pendant la première partie du cycle, les gaz d'échappement étant à une température inférieure à la température de désorption.

Pendant le début de la seconde partie du cycle d'homologation, les gaz d'échappement et le corps catalyseur 12 sont encore à une température inférieure à la température d'amorçage du catalyseur de conversion des oxydes d'azote, et la température de désorption des oxydes d'azote de l'adsorbeur 14 n'est pas encore atteinte.

La température d'amorçage du catalyseur et la température de désorption sont atteintes pratiquement simultanément pendant la seconde partie du cycle d'homologation.

Les rejets gazeux d'oxydes d'azote peuvent être limités à une valeur inférieure aux normes, pendant la première partie et pendant le début de la seconde partie du cycle d'homologation, du fait de l'adsorption des oxydes d'azote par l'adsorbeur 14.

Les normes concernant les rejets d'oxydes d'azote sont également respectées par la suite, pendant tout le déroulement de la seconde partie du cycle d'homologation, du fait de la conversion catalytique des oxydes d'azote au contact du corps catalyseur.

Le dispositif de traitement suivant l'invention permet donc de limiter les rejets d'oxydes d'azote dans toutes les phases de fonctionnement du moteur Diesel et de répondre aux normes les plus exigeantes.

Sur les figures 3 et 4 et sur les figures 5 et 6, on a représenté un second et un troisième modes de réalisation d'un dispositif de traitement suivant l'invention disposé à l'intérieur d'un collecteur d'échappement d'un moteur Diesel.

Le second et le troisième modes de réalisation du dispositif de traitement selon l'invention ne diffèrent du premier mode de réalisation que par la structure et le montage de l'adsorbeur. On ne décrira donc que cette partie du dispositif en regard des figures 3 et 4 et en regard des figures 5 et 6, respectivement.

En outre, les éléments correspondants et identiques sur les figures 3 et 4 et 5 et 6 d'une part et 1 et 2 d'autre part portent les mêmes repères.

Dans le cas du second mode de réalisation représenté sur les figures 3 et 4, le moyen d'adsorption 20 est constitué par une couche de fibres métalliques 19 revêtues de matériau d'adsorption des oxydes d'azote maintenu contre la surface intérieure de la chambre cylindrique 3 du collecteur 2 par une pièce de forme annulaire 21 en grillage métallique réalisée à partir de fils d'acier inoxydable. La pièce annulaire 21 en grillage métallique est enfilée sur la partie d'extrémité du conduit d'échappement 8 et présente une épaisseur dans la direction radiale lui permettant de maintenir la couche 19 de fibres métalliques revêtues de matériau d'adsorption par serrage élastique contre la surface intérieure de l'enveloppe 3 du collecteur 2. La couche de fibres 19 présente une forme annulaire et comporte une ouverture traversante au niveau de l'ouverture de l'enveloppe 3 suivant laquelle est fixée la tubulure 9.

Le fonctionnement du dispositif représenté sur les figures 3 et 4 est sensiblement identique au fonctionnement du dispositif représenté sur les figures 1 et 2, les gaz d'échappement pénétrant dans le collecteur d'échappement venant en contact avec la couche 19 de fibres métalliques revêtues de matériau adsorbant, pendant leur circulation tourbillonnaire autour de l'axe de la chambre du collecteur. De plus, les gaz d'échappement viennent en contact avec la surface extérieure du conduit d'échappement 8 à travers le grillage 21 et assure l'échauffement du corps catalyseur 12 à travers la paroi du conduit d'échappement 8.

Sur les figures 5 et 6, on a représenté un troisième mode de réalisation d'un dispositif de traitement suivant l'invention.

Dans ce mode de réalisation, l'adsorbeur d'oxydes d'azote 22 est constitué par un lit de billes d'alumine 23 revêtues d'un matériau d'adsorption des oxydes d'azote maintenu contre la paroi intérieure de la chambre cylindrique 3 du collecteur d'échappement 2 par une enveloppe cylindrique 24 en tôle d'acier inoxydable placée et fixée dans une disposition coaxiale à l'intérieur de la chambre de l'enveloppe cylindrique 3 du collecteur 2. L'enveloppe tubulaire 24 en acier inoxydable est traversée par des ouvertures 25 dont le diamètre est légèrement inférieur au diamètre des billes constituant le lit 23. De préférence, les billes d'alumine du lit 23 ont un diamètre pouvant aller de 2 à 3 mm. Le lit 23 remplit un espace de forme annulaire entre la paroi intérieure de l'enveloppe 3 du collecteur et la paroi de l'enveloppe 24 en acier inoxydable disposée coaxialement par rapport à l'enveloppe 3. Le lit de billes 23 est interrompu au niveau de l'ouverture de la tubulure 9 débouchant dans la chambre du collecteur 2.

Comme variante, le lit de billes 23 pourrait être maintenu contre la surface interne de l'enveloppe 3 par une pièce annulaire en grillage de fils d'acier inoxydable analogue à la pièce annulaire 21 représentée sur les figures 3 et 4, engagée sur le conduit 8 constituant une enveloppe renfermant le corps catalyseur 12.

Les gaz d'échappement introduits dans la chambre du collecteur 2 par la tubulure 9 pénètrent dans le lit de billes 23 de l'adsorbeur 22 et circulent, à l'intérieur du lit de billes, au contact de la surface extérieure des billes qui est revêtue d'une matière d'adsorption des oxydes d'azote. Une partie des oxydes d'azote contenus dans les gaz d'échappement est retenue par l'adsorbeur 22 dès le démarrage du moteur, les gaz d'échappement étant à une température voisine de la température ambiante.

De plus, les gaz d'échappement passant au travers des ouvertures 25 pénètrent dans l'espace annulaire compris entre l'enveloppe 24 en acier inoxydable maintenant le lit de billes 23 et le conduit d'échappement 8 dans lequel est disposé le corps catalyseur 12. Les gaz d'échappement qui sont en circulation tourbillonnaire autour de l'axe du collecteur à l'intérieur de cet espace assurent progressivement l'échauffement du corps catalyseur 12 à travers la paroi du conduit 8 lors de leur montée en température.

Le fonctionnement du dispositif selon le troisième mode de réalisation est donc identique au fonctionnement du dispositif selon le premier et le second modes de réalisation.

Sur les figures 7 et 8, on a représenté un moteur Diesel désigné de manière générale par le repère 30 qui comporte quatre cylindres en ligne alimentés en air de combustion par un collecteur d'admission 26 relié à un filtre à air 27, par l'intermédiaire de quatre tubulures d'admission reliées chacune à un cylindre du moteur.

Les quatre cylindres du moteur Diesel sont reliés chacun par l'intermédiaire d'une tubulure 29, à un collecteur d'échappement 28 constituant une enveloppe pour un dispositif de traitement suivant l'invention. L'enveloppe cylindrique du collecteur d'échappement 28 présente un axe parallèle à la ligne de cylindres du moteur 30.

Chacune des tubulures d'échappement 29 débouche dans la chambre du collecteur 28 délimitée par une enveloppe cylindrique 31, dans une direction tangentielle.

L'enveloppe 31 du collecteur 29 est reliée à l'une de ses extrémités axiales à une ligne d'échappement 34 du véhicule automobile dont la propulsion est assurée par le moteur Diesel 30. La ligne d'échappement 34 est prolongée, à l'intérieur de l'enveloppe 31 du collecteur 28, dans la direction axiale de l'enveloppe 31, par un conduit 35 dans lequel est logé un corps catalyseur 32.

L'espace de forme annulaire compris entre le conduit 35 et la paroi intérieure de l'enveloppe 31 contient un matériau 33 d'adsorption des oxydes d'azote.

Le corps catalyseur 32 et le matériau d'adsorption 33 placés de manière coaxiale à l'intérieur de l'enveloppe 31 du collecteur 28 constituent un dispositif de traitement suivant l'invention tel que décrit en regard des figures 1 à 6.

Sur les figures 9 et 10, on a représenté une variante de réalisation du dispositif de traitement de gaz d'échappement d'un moteur Diesel représenté sur les figures 7 et 8.

Les éléments correspondants sur les figures 9 et 10 d'une part et 7 et 8 d'autre part sont désignés par les mêmes repères, avec cependant l'exposant ' (prime) en ce qui concerne les éléments représentés sur les figures 9 et 10.

Le moteur Diesel 30' comporte un collecteur d'échappement 28' ayant une enveloppe cylindrique 31' dont l'axe est parallèle à la ligne de cylindres du moteur 30'.

Les tubulures d'échappement 29' du moteur 30' débouchent à l'intérieur de l'enveloppe cylindrique 31' du collecteur 28', dans une direction tangentielle.

Le collecteur 28' est relié à chacune de ses extrémités à une ligne d'échappement, respectivement 34'a et 34'b. Les lignes d'échappement 34'a et 34'b sont prolongées, à l'intérieur de l'enveloppe cylindrique 31' du collecteur 28', par des conduits respectifs 35'a et 35'b à l'intérieur desquels sont disposés des corps catalyseurs respectifs 32'a et 32'b.

Les extrémités terminales des conduits 35'a et 35'b sont en vis-à-vis et à une certaine distance l'une de l'autre, dans la partie centrale de l'enveloppe cylindrique 31' du collecteur 28'.

L'espace annulaire compris entre les conduits 35'a et 35'b d'une part et la paroi intérieure de l'enveloppe cylindrique 31' du collecteur 28' d'autre part contient un matériau d'adsorption des oxydes d'azote 33'.

Le dispositif de traitement de gaz d'échappement disposé à l'intérieur du collecteur 28' du moteur 30' fonctionne d'une manière analogue aux dispositifs de traitement qui ont été décrits plus haut.

Les gaz d'échappement du moteur Diesel 30' pénètrent dans la chambre 31' du collecteur 28' dans une direction tangentielle de manière qu'ils constituent un flux tourbillonnant autour de l'axe de l'enveloppe 31'. Les gaz d'échappement viennent en contact avec l'adsorbeur d'oxydes d'azote 33' et avec la surface extérieure des conduits 35'a et 35'b, de manière telle qu'ils assurent l'échauffement des corps catalyseurs 32'a et 32'b.

Les gaz d'échappement dans lesquels une partie des oxydes d'azote a été prélevée par passage dans l'adsorbeur 33' parviennent dans la zone centrale de l'enveloppe 31' du collecteur 28' entre les corps catalyseurs 32'a et 32'b. Le flux de gaz parvenant à la partie centrale de la chambre du collecteur se sépare en deux flux traversant respectivement le corps catalyseur 32'a à l'intérieur du conduit 35'a et le corps catalyseur 32'b à l'intérieur du conduit 35'b, pour ressortir du collecteur d'échappement 28' par les lignes d'échappement 34'a et 34'b respectivement.

Dans tous les cas, les dispositifs de traitement suivant l'invention permettent d'éviter des rejets importants d'oxydes d'azote dans l'atmosphère quelle que soit la phase de fonctionnement d'un moteur Diesel et également pendant tout le cycle d'homologation d'un tel moteur.

L'invention ne se limite pas aux modes de réalisation qui ont été décrits.

C'est ainsi qu'on peut imaginer de réaliser l'adsorbeur d'oxydes d'azote sous une forme différente de celles qui ont été décrites et assurer son maintien à la périphérie de la chambre du collecteur d'échappement également, d'une manière différente.

Selon la place disponible dans le compartiment moteur du véhicule, le collecteur d'échappement dans lequel est logé le dispositif de traitement des gaz d'échappement peut renfermer plusieurs ensembles constitués chacun par un élément adsorbeur et un corps catalyseur dans des dispositions coaxiales. Les ensembles de traitement des gaz à disposition coaxiale constitués d'un adsorbeur et d'un corps catalyseur peuvent être placés en opposition, à l'intérieur de l'enveloppe du collecteur, comme représenté sur la figure 9, lorsque le collecteur est relié à deux lignes d'échappement opposées. Ces ensembles peuvent être également placés de manière superposée ou bien encore en parallèle dans l'enveloppe du collecteur d'échappement.

Des dispositions particulières des ensembles du dispositif de traitement des gaz peuvent être nécessitées par exemple pour obtenir un accord d'échappement entre les cylindres d'un moteur.

L'adsorbeur peut être réalisé de manière à fixer non seulement les oxydes d'azote NOₓ des gaz d'échappement mais également d'autres substances telles que les hydrocarbures imbrûlés.

L'invention s'applique à tout moteur Diesel comportant un collecteur relié à une ligne d'échappement dans lequel débouchent les tubulures d'échappement du moteur, dans une direction tangentielle.

## Revendications

1. Dispositif de traitement des gaz d'échappement d'un moteur (30, 30') à allumage par compression d'un véhicule automobile comportant au moins un corps catalyseur (12, 32, 32'a, 32'b) disposé à l'intérieur d'un collecteur d'échappement (2, 28, 28') du moteur (30, 30') ayant une enveloppe (3, 31, 31') de forme cylindrique dans laquelle débouche, dans une direction sensiblement tangentielle, au moins une tubulure (9, 29, 29') d'échappement communiquant avec un cylindre du moteur et qui est reliée à au moins une de ses extrémités longitudinales à au moins une ligne d'échappement (8, 34, 34'a, 34'b) du véhicule automobile, caractérisé par le fait qu'il comporte, à l'intérieur de l'enveloppe du collecteur d'échappement (2, 28, 28'), le corps catalyseur dans une disposition centrale et au moins un moyen d'adsorption (15, 20, 22, 33, 33') des oxydes d'azote des gaz d'échappement dans une disposition périphérique, autour du corps catalyseur (12, 32, 32'a, 32'b), de telle sorte que les gaz d'échappement introduits par la tubulure (9, 29, 29') dans l'enveloppe (3, 31, 31') circulent de manière tourbillonnaire autour du corps catalyseur (12, 32, 32'a, 32'b) en contact avec le moyen d'adsorption et avec une surface externe du corps catalyseur (12, 32, 32'a, 32'b).

2. Dispositif selon la revendication 1, caractérisé par le fait que le corps catalyseur est disposé à l'intérieur d'un conduit (8, 35, 35'a, 35'b) constituant une partie d'extrémité de la ligne d'échappement (34, 34'a, 34'b) disposée à l'intérieur de l'enveloppe (3, 31, 31') du collecteur et que le moyen d'adsorption est disposé dans un espace annulaire périphérique ménagé entre le conduit (8, 35, 35'a, 35'b) renfermant le corps catalyseur (12, 32, 32'a, 32'b) et l'enveloppe (3, 31, 31') du collecteur, dans lequel débouche la tubulure d'échappement (9, 29, 29').

3. Dispositif selon l'une quelconque des revendications 1 et 2, caractérisé par le fait que le moyen d'adsorption (14) des oxydes d'azote des gaz d'échappement est constitué par une enveloppe tubulaire (15) en tôle métallique revêtue d'au moins un matériau d'adsorption d'oxydes d'azote placé à l'intérieur de l'enveloppe 3 du collecteur d'échappement (2), dans une disposition sensiblement coaxiale par rapport à l'enveloppe (3) du collecteur (2), de forme cylindrique.

4. Dispositif suivant la revendication 3, caractérisé par le fait que la tôle métallique constituant l'enveloppe tubulaire (15) du moyen d'adsorption d'oxydes d'azote est une tôle ondulée dont les ondulations sont dirigées parallèlement à l'axe de l'enveloppe tubulaire (15) et de l'enveloppe cylindrique (3) du collecteur (2).

5. Dispositif suivant l'une quelconque des revendications 3 et 4, caractérisé par le fait que l'enveloppe tubulaire (15) du moyen d'adsorption d'oxydes d'azote disposée autour du conduit d'échappement (8) renfermant le corps catalyseur (12) est traversée par une pluralités d'ouvertures (16) réparties sur toute sa surface.

6. Dispositif suivant l'une quelconque des revendications 1 et 2, caractérisé par le fait que les moyens d'adsorption d'oxydes d'azote dans les gaz d'échappement sont constitués par une couche (19) de fibres métalliques revêtues par au moins un matériau d'adsorption d'oxydes d'azote, de forme annulaire, maintenue par un dispositif de maintien (21) contre la surface intérieure de l'enveloppe cylindrique (3) du collecteur (2).

7. Dispositif suivant la revendication 6, caractérisé par le fait que le dispositif (21) de maintien de la couche de fibres (19) est constitué par un élément de forme annulaire constitué par un grillage de fils en acier inoxydable qui est engagé sur une enveloppe (8) renfermant le corps catalyseur (12).

8. Dispositif selon l'une quelconque des revendications 1 et 2, caractérisé par le fait que les moyens (22) d'adsorption d'oxydes d'azote dans les gaz d'échappement sont constitués par un lit (23) de billes revêtues d'une couche d'au moins un matériau d'adsorption d'oxydes d'azote, de forme annulaire, maintenu contre la surface intérieure de l'enveloppe cylindrique (3) du collecteur d'échappement (2), par un moyen de maintien (24) fixé à l'intérieur de l'enveloppe (3) du collecteur d'échappement (2).

9. Dispositif selon la revendication 8, caractérisé par le fait que le dispositif de maintien (24) du lit de billes (23) est constitué par une enveloppe tubulaire métallique, de préférence en acier inoxydable, traversée par des ouvertures (25) ayant un diamètre inférieur au diamètre des billes du lit (23).

10. Dispositif suivant la revendication 9, caractérisé par le fait que l'enveloppe tubulaire (24) est fixée dans l'enveloppe (3) du collecteur tubulaire (2), dans une disposition coaxiale à l'enveloppe (3).

11. Dispositif suivant la revendication 8, caractérisé par le fait que le dispositif de maintien du lit de billes (23) est constitué par un élément de forme annulaire en un grillage de fils d'acier inoxydable fixé à l'intérieur de l'enveloppe (3) du collecteur (2) par engagement sur une enveloppe (8) renfermant le corps catalyseur (12).

12. Dispositif suivant l'une quelconque des revendications 8 à 11, caractérisé par le fait que les billes du lit (23) recouvertes d'au moins un adsorbeur d'oxydes d'azote sont en alumine.

13. Dispositif suivant l'une quelconque des revendications 1 à 12, pour le traitement des gaz d'échappement d'un moteur à allumage par compression comportant plusieurs cylindres en ligne, caractérisé par le fait que l'enveloppe (31) du collecteur (28) de forme cylindrique présente un axe parallèle à la ligne de cylindres et que des tubulures d'échappement (29) reliées chacune à un cylindre du moteur débouchent dans l'enveloppe (31) du collecteur (28) dans une direction sensiblement tangentielle.

14. Dispositif suivant la revendication 13, caractérisé par le fait que l'enveloppe (31') du collecteur d'échappement (28') est reliée à une ligne d'échappement (34'a, 34'b) à chacune de ses extrémités prolongées chacune à l'intérieur de l'enveloppe (31') du collecteur (28') par un conduit (35'a, 35'b) renfermant un corps catalyseur (32'a, 32'b), les corps catalyseurs (32'a, 32'b) et les conduits (35'a, 35'b) comportant des extrémités à l'intérieur de l'enveloppe (31') du collecteur (28') en vis-à-vis et espacées l'une de l'autre au voisinage de la partie centrale de l'enceinte (31') du collecteur (28').

15. Dispositif selon la revendication 14, caractérisé par le fait qu'un élément d'adsorption d'oxydes d'azote est disposé à l'intérieur de l'enveloppe (31') du collecteur d'échappement (28'), autour de chacun des conduits (35'a, 35'b) renfermant un corps catalyseur (32'a, 32'b).

## Claims

1. Device for treating the exhaust gases of a compression-ignition engine (30, 30') of a motor vehicle, comprising at least one catalytic converter (12, 32, 32'a, 32'b) placed inside an exhaust manifold (2, 28, 28') of the engine (30, 30') having a casing (3, 31, 31') of cylindrical shape into which emerges, in an approximately tangential direction, at least one exhaust tube (9, 29, 29') communicating with a cylinder of the engine and which is connected at at least one of its longitudinal ends to at least one exhaust line (8, 34, 34'a, 34'b) of the motor vehicle, characterized in that it comprises, inside the casing of the exhaust manifold (2, 28, 28'), the catalytic converter in a central location and at least one means (15, 20, 22, 33, 33') for adsorbing the nitrogen oxides of the exhaust gases in a peripheral arrangement, around the catalytic converter (12, 32, 32'a, 32'b), in such a way that the exhaust gases introduced via the tube (9, 29, 29') into the casing (3, 31, 31') flow in a swirling manner around the catalytic converter (12, 32, 32'a, 32'b) in contact with the adsorption means and with an external surface of the catalytic converter (12, 32, 32'a, 32'b).

2. Device according to Claim 1, characterized in that the catalytic converter is located inside a duct (8, 35, 35'a, 35'b) constituting an end part of the exhaust line (34, 34'a, 34'b) located inside the casing (3, 31, 31') of the manifold and in that the adsorption means is located in a peripheral annular space provided between the duct (8, 35, 35'a, 35'b) containing the catalytic converter (12, 32, 32'a, 32'b) and the casing (3, 31, 31') of the manifold, into which the exhaust tube (9, 29, 29') opens.

3. Device according to either of Claims 1 and 2, characterized in that the means (14) for adsorbing the nitrogen oxides of the exhaust gases consists of a tubular casing (15) made of metal sheet coated with at least one material for adsorbing nitrogen oxides, which is placed inside the casing (3) of the exhaust manifold (2) in an approximately coaxial arrangement with respect to the casing (3) of the cylindrically shaped manifold (2).

4. Device according to Claim 3, characterized in that the metal sheet constituting the tubular casing (15) of the means for adsorbing nitrogen oxides is a corrugated sheet, the corrugations of which are directed so as to be parallel to the axis of the tubular casing (15) and of the cylindrical casing (3) of the manifold (2).

5. Device according to either of Claims 3 and 4, characterized in that the tubular casing (15) of the means for adsorbing nitrogen oxides, which is located around the exhaust duct (8) containing the catalytic converter (12), is penetrated by a pluralities of openings (16) distributed over its entire surface.

6. Device according to either of Claims 1 and 2, characterized in that the means for adsorbing nitrogen oxides in the exhaust gases consist of a layer (19) of metal fibres coated with at least one material for adsorbing nitrogen oxides, which is of annular shape and held by a holding device (21) against the inner surface of the cylindrical casing (3) of the manifold (2).

7. Device according to Claim 6, characterized in that the device (21) for holding the layer (19) of fibres consists of an element of annular shape formed by a stainless steel wire mesh which is fitted over a casing (8) containing the catalytic converter (12).

8. Device according to either of Claims 1 and 2, characterized in that the means (22) for adsorbing nitrogen oxides in the exhaust gases consist of a bed (23) of beads coated with a layer of at least one material for adsorbing nitrogen oxides, which is of annular shape and held against the inner surface of the cylindrical casing (3) of the exhaust manifold (2) by a holding means (24) fastened to the inside of the casing (3) of the exhaust manifold (2).

9. Device according to Claim 8, characterized in that the device (24) for holding the bed of beads (23) consists of a metal tubular casing, preferably made of stainless steel, penetrated by openings (25) having a diameter less than the diameter of the beads of the bed (23).

10. Device according to Claim 9, characterized in that the tubular casing (24) is fastened in the casing (3) of the tubular manifold (2) in an arrangement coaxial with the casing (3).

11. Device according to Claim 8, characterized in that the device for holding the bed of beads (23) consists of an element of annular shape made of a stainless steel wire mesh fastened to the inside of the casing (3) of the manifold (2) by fitting it over a casing (8) containing the catalytic converter (12).

12. Device according to any one of Claims 8 to 11, characterized in that the beads of the bed (23) which are covered with at least one adsorber of nitrogen oxides are made of alumina.

13. Device according to any one of Claims 1 to 12, for the treatment of the exhaust gases of a compression-ignition engine comprising several in-line cylinders, characterized in that the casing (31) of the cylindrically shaped manifold (28) has an axis parallel to the line of cylinders and in that the exhaust tubes (29) each connected to one cylinder of the engine open into the casing (31) of the manifold (28) in an approximately tangential direction.

14. Device according to Claim 13, characterized in that the casing (31') of the exhaust manifold (28') is connected to an exhaust line (34'a, 34'b) at each of its ends, each of these ends being extended inside the casing (31') of the manifold (28') by a duct (35'a, 35'b) containing a catalytic converter (32'a, 32'b), the catalytic converters (32'a, 32'b) and the ducts (35'a, 35'b) having ends inside the casing (31') of the manifold (28') which face each other and are spaced apart near the central part of the enclosure (31') for the manifold (28').

15. Device according to Claim 14, characterized in that an element for adsorbing nitrogen oxides is located inside the casing (31') of the exhaust manifold (28') around each of the ducts (35'a, 35'b) containing a catalytic converter (32'a, 32'b).

## Patentansprüche

1. Abgasbehandlungsvorrichtung zum Behandeln der Abgase eines Dieselmotors (30, 30') eines Automobils mit zumindest einem innerhalb eines Auspuffkrümmers (2, 28, 28') des Motors (30, 30') angeordneten Katalysatorkörper (12, 32, 32'a, 32'b) mit einem zylindrisch geformten Gehäuse (3, 31, 31'), in das mindestens ein mit einem Zylinder des Motors in Verbindung stehender Auspuffrohrstutzen (9, 29, 29'), der mit zumindest einem seiner Längsenden mit mindestens einer Abgasleitung (8, 34, 34'a, 34'b) des Automobils verbunden ist, in einer im wesentlichen tangentialen Richtung einmündet, dadurch gekennzeichnet, daß es innerhalb des Gehäuses des Auspuffkrümmers (2, 28, 28') den Katalysatorkörper in einer zentralen Anordnung und mindestens eine Stickoxidadsorber-Einrichtung (15, 20, 22, 33, 33') für die Stickoxide aus den Abgasen in einer umlaufenden Anordnung aufweist, die so um den Katalysatorkörper (12, 32, 32'a, 32'b) herum angeordnet ist, daß die von dem Stutzen (9, 29, 29') in das Gehäuse (3, 31, 31') eingeführten Abgase in einer turbulenten Weise um den Katalysatorkörper (12, 32, 32'a, 32'b) herum zirkulieren, wobei sie mit der Adsorbereinrichtung und mit einer Außenfläche des Katalysatorkörpers (12, 32, 32'a, 32'b) in Kontakt stehen.

2. Abgasbehandlungsvorrichtung nach Anspruch 1, dadurch gekennzeichnet, daß der Katalysatorkörper innerhalb eines Leitungsrohrs (8, 35, 35'a, 35'b) angeordnet ist, das einen innerhalb des Krümmergehäuses (3, 31, 31') angeordneten Endteil der Abgasleitung (34, 34'a, 34'b) bildet, und daß die Adsorbereinrichtung in einem ringförmigen, umlaufenden Raum angeordnet ist, der zwischen dem den Katalysatorkörper (12, 32, 32'a, 32'b) umschließenden Leitungsrohr (8, 35, 35'a, 35'b) und dem Krümmergehäuse (3, 31, 31'), in welches der Auspuffrohrstutzen (9, 29, 29') mündet, vorgesehen ist.

3. Abgasbehandlungsvorrichtung nach einem der Ansprüche 1 und 2, dadurch gekennzeichnet, daß die Stickoxidadsorber-Einrichtung (14) für die Stickoxide in den Abgasen durch ein innerhalb des Gehäuses (3) des Auspuffkrümmers (2) bezüglich des Krümmergehäuses (3) im wesentlichen koaxial angeordnetes und zylindrisch ausgeformtes rohrförmiges Gehäuse (15) gebildet ist, das aus einem Metallblech besteht, das mit zumindest einem Stickoxide adsorbierenden Material beschichtet ist.

4. Abgasbehandlungsvorrichtung nach Anspruch 3, dadurch gekennzeichnet, daß das Metallblech, aus welchem das rohrförmige Gehäuse (15) der Stickoxidadsorber-Einrichtung gebildet ist, ein Wellblech ist, dessen Wellen parallel zur Achse des rohrförmigen Gehäuses (15) und des zylindrischen Gehäuses (3) des Krümmers (2) ausgerichtet sind.

5. Abgasbehandlungsvorrichtung nach einem der Ansprüche 3 und 4, dadurch gekennzeichnet, daß das um das Abgasrohr (8) herum angeordnete, den Katalysatorkörper (12) umfassende rohrförmige Gehäuse (15) der Stickoxidadsorber-Einrichtung von einer Mehrzahl von Öffnungen (16) durchsetzt ist, die auf seiner gesamten Oberfläche verteilt sind.

6. Abgasbehandlungsvorrichtung nach einem der Ansprüche 1 und 2, dadurch gekennzeichnet, daß die Stickoxidadsorber-Einrichtung für die Stickoxide in den Abgasen durch eine ringförmig ausgebildete Schicht (19) aus metallischen Fasern gebildet ist, welche mit zumindest einem Stickoxide adsorbierenden Material beschichtet sind, wobei die Schicht (19) durch eine Haltevorrichtung (21) gegen die Innenfläche der zylindrischen Gehäuse (3) des Krümmers (2) gehalten ist.

7. Abgasbehandlungsvorrichtung nach Anspruch 6, dadurch gekennzeichnet, daß die die Faserschicht (19) haltende Haltevorrichtung (21) durch ein ringförmiges Element gebildet ist, welches aus einem Drahtgeflecht aus rostfreiem Stahl gebildet ist, das auf dem den Katalysatorkörper (12) umfassenden Gehäuse (8) eingreift.

8. Abgasbehandlungsvorrichtung nach einem der Ansprüche 1 und 2, dadurch gekennzeichnet, daß die Stickoxidadsorber-Einrichtung für die Stickoxide in den Abgasen durch eine ringförmige Lage (23) aus Kugeln gebildet ist, welche mit einer Schicht aus mindestens einem Stickoxide adsorbierenden Material beschichtet sind, wobei die Lage (23) durch eine innerhalb des Gehäuses (3) des Auspuffkrümmers (2) befestigte Haltevorrichtung (24) gegen die Innenfläche des zylindrischen Gehäuses (3) des Auspuffkrümmers (2) gehalten ist.

9. Abgasbehandlungsvorrichtung nach Anspruch 8, dadurch gekennzeichnet, daß die Haltevorrichtung (24) für die Lage aus Kugeln (23) durch ein rohrförmiges Gehäuse aus Metall, vorzugsweise aus rostfreiem Stahl, gebildet ist, das von Öffnungen (25) durchsetzt ist, deren Durchmesser kleiner als der Durchmesser der Kugeln der Lage (23) ist.

10. Abgasbehandlungsvorrichtung nach Anspruch 9, dadurch gekennzeichnet, daß das rohrförmige Gehäuse (24) in einer bezüglich des Gehäuses (3) koaxialen Anordnung in dem Gehäuse (3) des rohrförmigen Krümmers (2) befestigt ist.

11. Abgasbehandlungsvorrichtung nach Anspruch 8, dadurch gekennzeichnet, daß die Haltevorrichtung für die Lage aus Kugeln (23) durch ein ringförmiges Element aus einem Drahtgeflecht aus rostfreiem Stahl gebildet ist, das durch einen Eingriff auf einem den Katalysatorkörper (12) umfassenden Gehäuse (8) innerhalb des Gehäuses (3) des Krümmers (2) befestigt ist.

12. Abgasbehandlungsvorrichtung nach einem der Ansprüche 8 bis 11, dadurch gekennzeichnet, daß die mit zumindest einem Stickoxide adsorbierenden Material beschichteten Kugeln der Lage (23) aus Aluminiumoxid bestehen.

13. Abgasbehandlungsvorrichtung nach einem der Ansprüche 1 bis 12, zur Behandlung der Abgase eines Dieselmotors mit mehreren in Reihe angeordneten Zylindern, dadurch gekennzeichnet, daß das zylindrisch geformte Gehäuse (31) des Krümmers (28) eine zur Reihe der Zylinder parallel verlaufende Achse aufweist und daß Auspuffrohrstutzen (29), die jeweils mit einem Zylinder des Motors verbunden sind, in einer im wesentlichen tangentialen Richtung in das Gehäuse (31) des Krümmers (28) einmünden.

14. Abgasbehandlungsvorrichtung nach Anspruch 13, dadurch gekennzeichnet, daß das Gehäuse (31') des Auspuffkrümmers (28') an jedem Ende einer Abgasleitung (34'a, 34'b), welche jeweils mittels eines einen Katalysatorkörper (32'a, 32'b) umfassenden Leitungsrohrs (35'a, 35'b) bis in das Gehäuse (31') des Krümmers (28') hinein verlängert sind, mit dieser Abgasleitung (34'a, 34'b) verbunden ist, wobei die Katalysatorkörper (32'a, 32'b) und die Leitungsrohre (35'a, 35'b) innerhalb des Gehäuses (31') des Krümmers (28') einander gegenüber und im Abstand zueinander und angrenzend an den Mittelteil des Schutzgehäuses (31') des Krümmers (28') angeordnete Enden aufweisen.

15. Abgasbehandlungsvorrichtung nach Anspruch 14, dadurch gekennzeichnet, daß innerhalb des Gehäuses (31') des Auspuffkrümmers (28') um jedes der einen Katalysatorkörper (32'a, 32'b) umfassenden Leitungsrohre (35'a, 35'b) herum ein Stickoxid-Adsorberelement angeordnet ist.
